# EUROPEAN PATENT APPLICATION

(11) **EP 1 790 837 A1**
(43) Date of publication of application: **30.05.2007**
(21) Application number: 05785867.2
(22) Date of filing: 14.09.2005
(51) Int. Cl.: F01N 3/02, B01D 46/42, B01D 53/94

(54) **EXHAUST EMISSION CONTROL SYSTEM OF INTERNAL COMBUSTION ENGINE**

(30) Priority: 14.09.2004 JP 2004267237
(71) Applicant: TOYOTA JIDOSHA KABUSHIKI KAISHA, Toyota-shi, Aichi-ken 471-8571 (JP)
(72) Inventor: KOGO, Tomoyuki, TOYOTA JIDOSHA KABUSHIKI KAISHA, Toyota-shi, Aichi, 471-8571 (JP)
(74) Representative: TBK-Patent
(86) International application number: PCT/JP2005/017536
(87) International publication number: WO 2006/030973

(57) **Abstract**

In an exhaust gas purification system for an internal combustion engine having a filter provided in an exhaust passage of the internal combustion engine, the particulate matter deposited on the filter is oxidized and removed more excellently. When the running state of the internal combustion engine shifts to idling while a filter regeneration control is executed, in the case that it is judged that it is not possible to continue the filter regeneration control while suppressing an excessive temperature rise of the filter unless the idling rotation speed is made higher than an upper limit value of the idling rotation speed, execution of the filter regeneration control is stopped (S106). On the other hand, when the running state of the internal combustion engine shifts to idling while a filter regeneration control is executed, in the case that it is judged that it is possible to continue the filter regeneration while suppressing an excessive temperature rise of the filter if the idling rotation speed is set to a value higher than or equal to the normal idling rotation speed within the range lower than an upper limit value of the idling rotation speed, the idling rotation speed is adjusted to a value higher than or equal to the normal idling rotation speed, and execution of the filter regeneration control is continued (S107).

## Description

### TECHNICAL FIELD

The present invention relates to an exhaust gas purification system for an internal combustion engine having a particulate filter provided in an exhaust passage of the internal combustion engine for trapping particulate matter contained in the exhaust gas.

### BACKGROUND ART

Japanese Patent Application Laid-Open No. 2003-161139 discloses a technique in which in an exhaust gas purification apparatus for an internal combustion engine having a particulate filter (which will be simply referred to as a filter hereinafter) provided in an exhaust passage of the internal combustion engine for trapping particulate matter (which will be referred to as PM hereinafter) contained in the exhaust gas, if the running state of the internal combustion engine is idling at the time when a filter regeneration control is started and while the filter regeneration control is executed, the idling rotation speed is increased to a predetermined rotation speed. Japanese Patent Application Laid-Open No. 2004-68804 and Japanese Patent Application laid-Open No. 2003-239724 also disclose techniques concerning filter regeneration control.

### DISCLOSURE OF THE INVENTION

In an exhaust gas purification system for an internal combustion engine having a filter provided in an exhaust passage of the internal combustion engine, when the amount of the PM deposited on the filter (which will be referred to as the PM deposition amount) becomes equal to or larger than a specified PM deposition amount, a filter regeneration control for oxidizing and removing the PM by raising the temperature of the filter to a target temperature is performed.

If the running state of the internal combustion engine shifts to idling while such a filter regeneration control is performed, the flow rate of the exhaust gas flowing into the filter (which will be simply referred to as the exhaust gas flow rate) decreases, and therefore the quantity of heat carried away from the filter decreases. As a result there is a risk that the temperature of the filter can rise excessively. For this reason, when the running state of the internal combustion engine shifts to idling while the filter regeneration control is performed, the idling rotation speed is made higher than that in the normal state in some cases. By doing so, a decrease in the exhaust gas flow rate can be controlled, and therefore it is possible to suppress an excessive temperature rise of the filter.

However, if the idling rotation speed becomes excessively high, there is a risk that a decrease in fuel economy and an increase in unpreferable emission occur.

The present invention has been made in view of the above described problems, and has as an object to provide a technology for enabling to oxidize and remove the PM deposited on the filter more excellently in an exhaust gas purification system for an internal combustion engine having a filter provided in an exhaust passage of the internal combustion engine.

According to the present invention, when the running state of an internal combustion engine shifts to idling while the filter regeneration control is executed, if it is determined that it is not possible to continue the filter regeneration control while suppressing an excessive temperature rise of the filter unless the idling rotation speed is made higher than a predetermined upper limit value of the idling rotation speed, execution of the filter regeneration control is stopped. On the other hand, when the running state of an internal combustion engine shifts to idling while the filter regeneration control is executed, if it is determined that it is possible to continue the filter regeneration control while suppressing an excessive temperature rise of the filter by setting the idling rotation speed to a value higher than that in the normal state within the range below the upper limit value of the idling rotation speed, the idling rotation speed is set to a value higher than that in the normal state and execution of the filter regeneration control is continued.

More specifically, an exhaust gas purification system for an internal combustion engine according to the present invention comprises:
a particulate filter provided in an exhaust passage of the internal combustion engine to trap particulate matter contained in the exhaust gas;
PM deposition amount detection means for detecting the amount of the particulate matter deposited on the particulate filter; and
filter regeneration control execution means for executing, when the amount of the particulate matter detected by the PM deposition amount detection means becomes equal to or larger than a specified PM deposition amount, a filter regeneration control for oxidizing and removing the particulate matter deposited on said particulate filter by increasing the temperature of said filter to a target temperature,
characterized by:
idling detection means for detecting that the running state of said internal combustion engine shifts to idling; and
lower-limit-rotation-speed-allowing-to-continue-regeneration computation means for computing, based on the amount of the particulate matter detected by said PM deposition amount detection means, a lower limit rotation speed allowing to continue regeneration that is defined as a lower limit value of idling rotation speeds that make it possible to continue the filter regeneration control while suppressing an excessive temperature rise of said filter even if the running state of said internal combustion engine shifts to idling while the filter regeneration control is executed by said filter regeneration control execution means,
wherein when it is detected by said idling detection means that the running state of the internal combustion engine shifts to idling while the filter regeneration control is executed by said filter regeneration control execution means, if said lower limit rotation speed allowing to continue regeneration computed by said lower-limit-rotation-speed-allowing-to-continue-regeneration computation means is higher than a predetermined upper limit value of the idling rotation speed, execution of the filter regeneration control is stopped, and if said lower limit rotation speed allowing to continue regeneration computed by said lower-limit-rotation-speed-allowing-to-continue-regeneration computation means is equal to or lower than the upper limit value of the idling rotation speed, the engine rotation speed of the internal combustion engine is set to a value equal to or lower than said upper limit value of the idling rotation speed and equal to or higher than said lower limit rotation speed allowing to continue regeneration, and execution of the filter regeneration control is continued.

In the present invention, the filter regeneration control is executed by increasing the temperature of the filter to a target temperature when the PM deposition amount in the filter becomes equal to or larger than the specified PM deposition amount. Here, the target temperature is such a temperature at which it is possible to oxidize and remove the PM deposited on the filter and it is possible to prevent the filter from melting or being unduly deteriorated.

When the running state of the internal combustion engine shifts to idling while the filter regeneration control is performed, the lower limit rotation speed allowing to continue regeneration is computed based on the PM deposition amount at that time. The lower limit rotation speed allowing to continue regeneration is a value higher than the normal idling rotation speed and defined as the lower limit of the idling rotation speeds at which it is possible to ensure an exhaust gas flow rate that makes it possible to continue the filter regeneration control while suppressing an excessive temperature rise of the filter even if the running state of the internal combustion engine shifts to idling. The smaller the PM deposition amount is, the lower the lower limit rotation speed allowing to continue regeneration is. The larger the PM deposition amount is, the higher the lower limit rotation speed allowing to continue regeneration is.

Furthermore, according to the present invention, an upper limit value is set for the idling rotation speed. The upper limit value of the idling rotation speed is a threshold value above which the idling rotation speed can be considered to be excessively high. This means that if the idling rotation speed is equal to or lower than the upper limit, an increase in unpreferable emission and a decrease in fuel economy will be within the permissible level. This upper limit of the idling rotation speed is determined in advance by, for example, experiments.

In addition, when the running state of the internal combustion engine shifts to idling while the filter regeneration control is executed, if the lower limit rotation speed allowing to continue regeneration is higher than the upper limit value of the idling rotation speed, execution of the filter regeneration control is stopped. By this feature, it is possible to prevent not only an excessive temperature rise of the filter but also an excessive rise in the idling rotation speed.

On the other hand, if the lower limit rotation speed allowing to continue regeneration is equal to or lower than the upper limit value of the idling rotation speed when the running state of the internal combustion engine shifts to idling while the filter regeneration control is executed, the rotation speed of the internal combustion engine is set to a value equal to or lower than said upper limit value of the idling rotation speed and equal to or higher than said lower limit rotation speed allowing to continue regeneration, and execution of the filter regeneration control is continued. By this feature, it is possible to facilitate the filter regeneration control while suppressing an excessive temperature rise of the filter and an excessive rise in the idling rotation speed.

Thus, according to the present invention, even if the running state of the internal combustion engine shifts to idling while the filter regeneration control is executed, it is possible to prevent not only an excessive temperature rise of the filter but also an excessive rise in the idling rotation speed. This means that it is possible to suppress a decrease in fuel economy and an increase in unpreferable emission etc.. In addition, it is possible to facilitate the filter regeneration control as much as possible. Thus, it is possible to oxidize and remove the PM deposited on the filter more excellently.

According to the present invention, the smaller the PM deposition amount is, the lower the lower limit rotation speed allowing to continue regeneration is. Therefore, if the PM deposition amount decreases to some extent as oxidation/removal of the PM progresses after execution of the filter regeneration control is started, the lower limit rotation speed allowing to continue regeneration will become lower than or equal to the upper limit of the idling rotation speed when the running state of the internal combustion engine shifts to idling, and the filter regeneration control will be continued. This means that by changing the lower limit rotation speed allowing to continue regeneration based on the PM deposition amount, it is possible to facilitate the filter regeneration control more favorably.

In the present invention, when it is detected by the idling detection means that the running state of the internal combustion engine shifts to idling while the filter regeneration control is executed by the filter regeneration execution means, if the lower limit rotation speed allowing to continue regeneration is lower than or equal to the upper limit value of the idling rotation speed, the rotation speed of the internal combustion engine may be adjusted to the lower limit rotation speed allowing to continue regeneration and execution of the filter regeneration control may be continued.

By controlling the idling rotation speed in this way when continuing the filter regeneration control, it is possible to make the idling rotation speed as low as possible while suppressing an excessive temperature rise of the filter. This means that it is possible to suppress a decrease in fuel economy and an increase in unpreferable emission more effectively while suppressing an excessive temperature rise of the filter.

In the present invention, the higher the frequency of shift of the running state of the internal combustion engine to idling (which will be hereinafter referred to as the idling frequency) is, the higher the frequency of shift of the running state of the internal combustion engine to idling during execution of the filter regeneration control necessarily becomes, and consequently, the more frequently execution of the filter regeneration control is stopped. Therefore, there is a possibility that facilitation of oxidation and removal of the PM deposited on the filter becomes difficult.

In view of this, in the case where idling frequency detection means for detecting the idling frequency is further provided in the present invention, the higher the idling frequency detected by the idling frequency detection means is, the smaller the value of the specified PM deposition amount serving as the threshold value for starting execution of the filter regeneration control may be made.

The smaller the specified PM deposition amount is, the shorter the period over which the PM deposition amount is relatively large during execution of the filter regeneration control becomes.

Furthermore, in the present invention, the lower limit rotation speed allowing to continue regeneration is computed based on the PM deposition amount at the time when the running state of the internal combustion engine shifts to idling while the filter regeneration control is executed. Accordingly, if the period over which the PM deposition amount is relatively large during execution of the filter regeneration control becomes shorter, the period over which the lower limit rotation speed allowing to continue regeneration is higher than the upper limit value of the idling rotation speed while the running state of the internal combustion engine is idling becomes shorter. In other words, the period over which execution of the filter regeneration control is suspended while the running state of the internal combustion engine is idling becomes shorter.

Therefore, according to the above described control, while the filter regeneration control is executed, the higher the idling frequency is, the shorter the period over which execution of the filter regeneration control is suspended while the running state of the internal combustion engine is idling can be made. As a result, it is possible to reduce the frequency of suspension of execution of the filter regeneration control, even if the idling frequency is high. Thus, it is possible to facilitate oxidation and removal of the PM deposited on the filter.

### BRIEF DESCRIPTION OF THE DRAWINGS

Fig. 1 is a diagram schematically showing the structure of an internal combustion engine according to an embodiment of the present invention and its air-intake and exhaust systems.
Fig. 2 is a flow chart of a control routine for an excessive filter temperature rise suppression control according to the embodiment of the present invention.

### DETAILED DESCRIPTION OF THE EMBODIMENTS

In the following, specific embodiments of the exhaust gas purification system for an internal combustion engine according to the present invention will be described with reference to the drawings.

### (First Embodiment)

### (Basic Structure of the Internal Combustion Engine and its Air-Intake and Exhaust Systems)

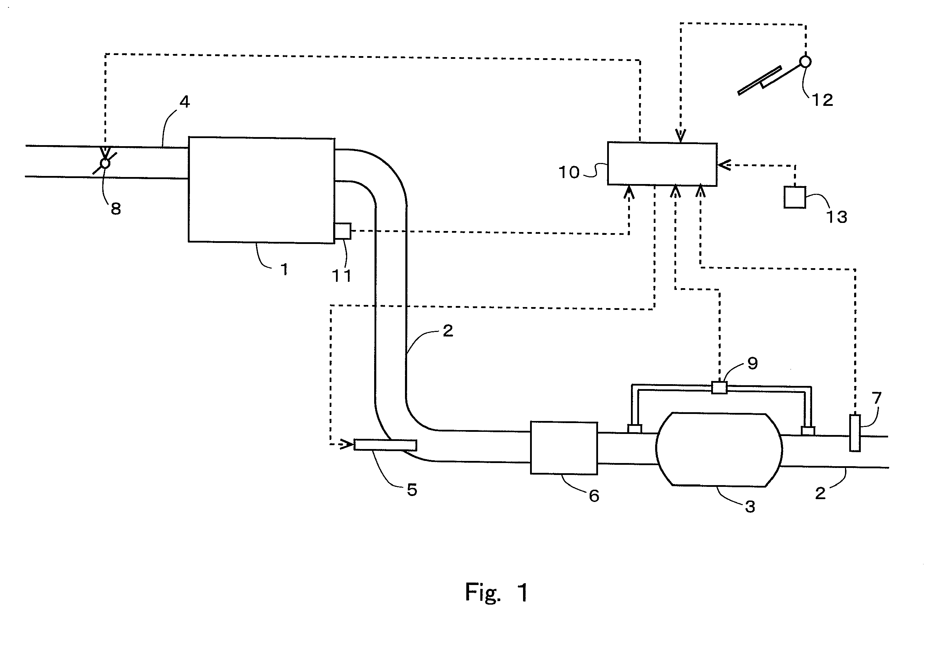

Here, a case where the present invention is applied to a diesel engine for driving a vehicle will be described by way of example. Fig. 1 is a diagram showing the basic structure of the internal combustion engine according to this embodiment and its air-intake and exhaust systems.

The internal combustion engine 1 is a diesel engine for driving a vehicle. The internal combustion engine 1 is connected with an intake passage 4 and an exhaust passage 2. In the intake passage 4 is provided a throttle valve 8. On the other hand, in the exhaust passage 2 is provided a particulate filter 3 (which will be simply referred to as the filter 3 hereinafter) that traps PM contained in the exhaust gas. An oxidation catalyst 6 is provided in the exhaust passage 2 upstream of the filter 3. Alternatively, an oxidation catalyst supported on the filter 3 may be provided instead of the oxidation catalyst 6 provided in the exhaust passage 2 upstream of the filter 3.

In the exhaust passage 2 is also provided an exhaust gas pressure difference sensor 9 that outputs an electric signal indicative of the pressure difference between upstream and downstream of the filter 3. An exhaust gas temperature sensor 7 that outputs an electric signal indicative of the temperature of the exhaust gas flowing through the exhaust passage 2 is provided in the exhaust passage 2 downstream of the filter 3. A fuel addition valve 5 for adding fuel into the exhaust gas is provided in the exhaust passage 2 upstream of the filter 3.

To the internal combustion engine 1 having the above-described structure is annexed an electronic control unit (ECU) 10 that controls the internal combustion engine 1. The ECU 10 is a unit that controls running conditions of the internal combustion engine 1 in accordance with running requirements of the internal combustion engine 1 and driver's demands. The ECU 10 is electrically connected with the exhaust gas pressure difference sensor 9, the exhaust gas temperature sensor 7, a crank position sensor 11 that outputs an electric signal indicative of the crank angle of the internal combustion engine 1, an accelerator opening sensor 12 that outputs an electric signal indicative of the accelerator opening, a clutch switch 13 that outputs an electric signal indicative of the state of the clutch etc., and the outputs signals from them are input to the ECU 10. The ECU 10 estimates the PM deposition amount on the filter 3 based on the output value of the exhaust gas pressure difference sensor 9. In this embodiment, the exhaust gas pressure difference sensor 9 constitutes the PM deposition amount estimation means according to the present invention. The ECU 10 estimates the temperature of the filter 3 based on the output value of the exhaust temperature sensor 7. The ECU 10 is also electrically connected with the throttle valve 8 and the fuel addition valve 5, which are controlled by the ECU 10.

### (Filter Regeneration Control)

In this embodiment, when an amount of PM equal to or larger than a specified PM deposition amount is deposited on the filter 3, the ECU 10 executes a filter regeneration control for oxidizing and removing the PM deposited on the filter 3, by decreasing the degree of opening of the throttle valve 8 and adding fuel into the exhaust gas through the fuel addition valve 5 to raise the temperature of the filter 3 to a target temperature. In this embodiment, the throttle valve 8 and the fuel addition valve 5 constitute the filter regeneration control execution means according to the present invention.

The fuel added through the fuel addition valve 5 is oxidized in the oxidation catalyst 6, and the temperature of the exhaust gas flowing into the filter 3 is raised by oxidation heat generated thereby. Thus, the temperature of the filter 3 rises with the rise in the temperature of the exhaust gas. By decreasing the degree of opening of the throttle valve 8, it is possible to decrease the flow rate of the exhaust gas, and consequently it is possible to make the temperature of the exhaust gas flowing into the filter 3 easy to raise. In view of this, in this embodiment, the temperature of the filter 3 is adjusted to a target temperature by controlling the quantity of the fuel added through the fuel addition valve 5 and the degree of opening of the throttle valve 8.

Here, the target temperature is a temperature at which it is possible to oxidize and remove the PM deposited on the filter 3 and it is possible to prevent the filter 3 from melting or being unduly deteriorated.

In this embodiment, the PM deposition amount on the filter 3 may be estimated based on the integral value of the fuel injection quantity in the internal combustion engine 1 and the time elapsed from the start of execution of the filter regeneration control etc. without the use of the exhaust gas pressure difference sensor 9.

### (Filter Excessive Temperature Rise Suppression Control during Idling)

When the running state of the internal combustion engine 1 shifts to idling while the above described filter regeneration control is executed, the quantity of heat carried away from the filter 3 decreases due to a decrease in the flow rate of the exhaust gas, and therefore there is a risk that the temperature of the filter 3 can rise excessively. In view of this, in this embodiment, when the running state of the internal combustion engine 1 shifts to idling while the filter regeneration control is executed, a filter excessive temperature rise suppression control for suppressing an excessive temperature rise of the filter 3 is executed.

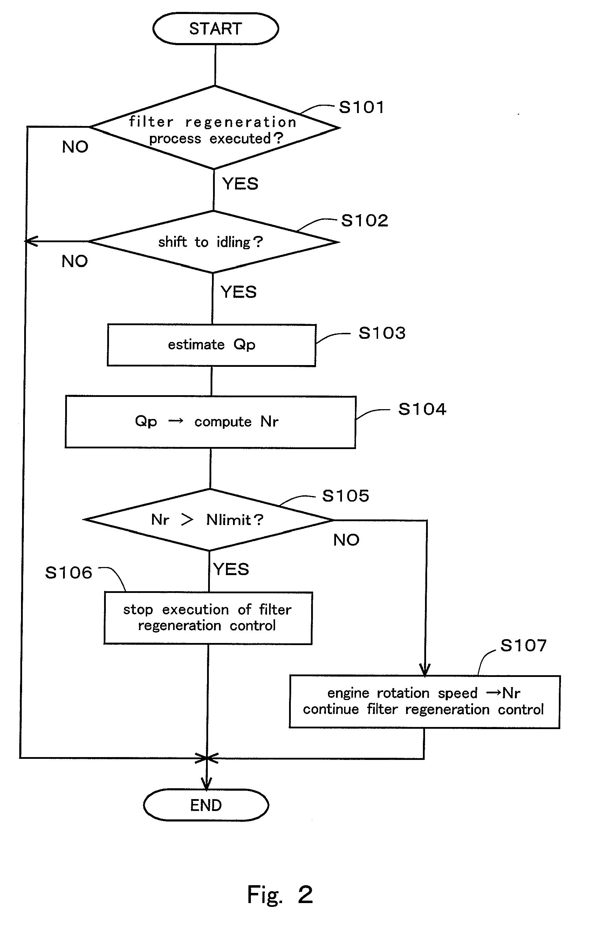

In the following, a control routine of the filter excessive temperature rise suppression control according to this embodiment will be described with reference to the flow chart shown in Fig. 2. This routine is stored in the ECU 10 in advance, and executed every time the crankshaft turns by a predetermined angle while the internal combustion engine 1 is running.

In this routine, firstly in step S101, the ECU 10 makes a determination as to whether or not the filter regeneration control is executed. If an affirmative determination is made in step S101, the ECU 10 advances to step S102, and if a negative determination is made, the ECU 10 once terminates execution of this routine.

In step S102, the ECU 10 makes a determination as to whether the running state of the internal combustion engine 1 has shifted to idling. Here, a determination as to whether or not the running state of the internal combustion engine 1 has shifted to idling is made based on an output signal from the clutch switch 13. In this embodiment, the clutch switch 13 constitutes the idling detection means according to the present invention. Alternatively, the determination as to whether the running state of the internal combustion engine 1 has shifted to idling may be made based on the engine rotation speed and the engine load of the internal combustion engine 1. In the latter case, the ECU 10 that executes the process of making a determination as to whether the running state of the internal combustion engine 1 has shifted to idling based on the engine rotation speed and the engine load of the internal combustion engine 1 constitutes the idling detection means according to the present invention. If an affirmative determination is made in step S102, the ECU 10 advances to step S103, and if a negative determination is made, the ECU 10 once terminates execution of this routine. If execution of this routine is terminated, the filter regeneration control will be continued.

In step S103, the ECU 10 estimates the current PM deposition amount Qp on the filter 3.

Then, the ECU 10 advances to step S104, where it computes a lower limit rotation speed allowing to continue regeneration Nr based on the PM deposition amount Qp. The lower limit rotation speed allowing to continue regeneration Nr is a value higher than normal idling rotation speeds and the lower limit of the rotation speeds that can ensure an exhaust gas flow rate with which it is possible to continue the filter regeneration control while suppressing an excessive temperature rise of the filter 3 even when the running state of the internal combustion engine 1 shifts to idling. In this embodiment, the relationship between the PM deposition amount Qp and the lower limit rotation speed allowing to continue regeneration Nr is stored in the ECU 10 in advance in the form of a map. In this map, the smaller the PM deposition amount Qp is, the lower the lower limit rotation speed allowing to continue regeneration Nr is, and the larger the PM deposition amount Qp is, the higher the lower limit rotation speed allowing to continue regeneration Nr is. In this embodiment, the ECU 10 that executes the process of computing the lower limit rotation speed allowing to continue regeneration Nr based on the map constitutes the lower-limit-rotation-speed-allowing-to continue-regeneration computation means according to the present invention.

Then, the ECU 10 advances to step S105, where it makes a determination as to whether the lower limit rotation speed allowing to continue regeneration Nr is higher than the upper limit value Nlimit of the idling rotation speed. The upper limit value Nlimit of the idling rotation speed is a threshold value above which it can be considered that the idling rotation speed is excessively high, namely, if the idling rotation speed is lower than or equal to the upper limit value Nlimit, an increase in unpreferable emission and a decrease in fuel economy etc. will be within the permissible level. The upper limit value Nlimit of the idling rotation speed is determined in advance by, for example, experiments and stored in the ECU 10. If an affirmative determination is made in step S105, the ECU 10 advances to step S106, and if a negative determination is made, the ECU advances to step S107.

In step S106, the ECU 10 stops execution of the filter regeneration control and once terminates execution of this routine.

On the other hand, in step S107, the ECU 10 adjusts the engine rotation speed of the internal combustion engine 1 to the lower limit rotation speed allowing to continue regeneration and continues execution of the filter regeneration control. After that, the ECU 10 once terminates execution of this routine.

In the above described routine, when the running state of the internal combustion engine 1 shifts to idling while the filter regeneration control is executed, if the lower limit rotation speed allowing to continue regeneration Nr is higher than the upper limit value Nlimit of the idling rotation speed, execution of the filter regeneration control is stopped. This makes it possible to suppress not only an excessive temperature rise of the filter 3 but also an excessive rise in the idling rotation speed.

On the other hand, if the lower limit rotation speed allowing to continue regeneration Nr is lower than or equal to the upper limit value Nlimit of the idling rotation speed when the running state of the internal combustion engine 1 shifts to idling while the filter regeneration control is executed, the engine rotation speed of the internal combustion engine 1 is adjusted to the lower limit rotation speed allowing to continue regeneration Nr, and execution of the filter regeneration control is continued. This makes it possible to facilitate the filter regeneration control while suppressing an excessive temperature rise of the filter 3 and an excessive rise in the idling rotation speed.

As per the above, according to this embodiment, even when the running state of the internal combustion engine 1 shifts to idling while the filter regeneration control is executed, it is possible to suppress not only an excessive temperature rise of the filter 3 but also an excessive rise in the idling rotation speed and to facilitate the filter regeneration control as much as possible. Thus, it is possible to oxidize and remove the PM deposited on the filter 3 more excellently.

In this embodiment, the smaller the PM deposition amount is, the lower the lower limit rotation speed allowing to continue regeneration is. Therefore, if the PM deposition amount decreases to some extent as oxidation/removal of the PM progresses after execution of the filter regeneration control is started, the lower limit rotation speed allowing to continue regeneration Nr will become lower than or equal to the upper limit value Nlimit of the idling rotation speed when the running state of the internal combustion engine 1 shifts to idling, and the filter regeneration control will be continued. This means that by changing the lower limit rotation speed allowing to continue regeneration Nr based on the PM deposition amount as described above, it is possible to facilitate the filter regeneration control more favorably.

In this embodiment, if the lower limit rotation speed allowing to continue regeneration Nr is lower than or equal to the upper limit value Nlimit of the idling rotation speed when the running state of the internal combustion engine 1 shifts to idling while the filter regeneration control is executed, the engine rotation speed of the internal combustion engine 1 may be adjusted to a value smaller than or equal to the upper limit value Nlimit of the idling rotation speed and larger than or equal to the lower limit rotation speed allowing to continue regeneration, and execution of the filter regeneration control may be continued.

In this case also, it is possible to facilitate the filter regeneration control while suppressing an excessive temperature rise of the filter 3 and an excessive rise in the idling rotation speed.

In the case where execution of the filter regeneration control is stopped when the running state of the internal combustion engine 1 shifts to idling while the filter regeneration control is executed, the engine rotation speed of the internal combustion engine 1 may be made higher than normal idling rotation speeds. In this case also, however, the engine rotation speed should be adjusted within the range below the upper limit value Nlimit of the idling rotation speed.

When the filter regeneration control is suspended, it is not necessary to regulate the exhaust gas flow rate to raise the temperature of the filter 3 to the target value, and therefore the degree of opening of the throttle valve 8 is made larger than that during execution of the filter regeneration control. Accordingly, when the filter regeneration control is suspended, the exhaust gas flow rate becomes lager than that during execution of the filter regeneration control even if the engine rotation speed of the internal combustion engine 1 is the same.

Therefore, with the above described control, it is possible to suppress an excessive temperature rise of the filter 3 while suppressing an excessive increase in the idling rotation speed, even in the case where the running state of the internal combustion engine 1 shifts to idling while the filter regeneration control is executed in the state in which the PM deposition amount is relatively large, that is, while the quantity of heat generated by oxidation of the PM is relatively large.

In addition, the specified PM deposition amount serving as the threshold value for starting execution of the filter regeneration control can be made larger. By making the specified PM deposition amount larger, it is possible to make the interval of execution of the filter regeneration control longer. In other words, it is possible to reduce the frequency of execution of the filter regeneration control. Therefore, it is possible to suppress a decrease in fuel economy and an increase in unpreferable emission that may be caused by execution of the filter regeneration control.

### (Second Embodiment)

The basic structure of the internal combustion engine according to this embodiment and its air-intake and exhaust systems is the same as that in the first embodiment, and descriptions thereof will be omitted. In this embodiment also, the filter regeneration control and the filter excessive temperature rise suppression control are performed in a manner similar to that in the first embodiment.

### (Method of Setting PM Deposition Amount)

When the above described filter regeneration control and the filter excessive temperature rise suppression control are performed, the higher the idling frequency of the internal combustion engine 1 is, the more frequently execution of the filter regeneration control is stopped. Therefore, there is a possibility that facilitation of oxidation and removal of the PM deposited on the filter 3 becomes difficult.

In view of this, in this embodiment, the specified PM deposition amount serving as the threshold for starting execution of the filter regeneration control is varied in accordance with the idling frequency. In the following, a way of setting the specified PM deposition amount according to this embodiment will be described.

In this embodiment, the idling frequency of the internal combustion engine 1 is computed by the ECU 10 while the engine is running. In connection with this, the idling frequency may be computed as the number of times of shift of the running state of the internal combustion engine 1 to idling while the internal combustion engine 1 is operated for a predetermined time. In this embodiment, the ECU 10 that executes the process of computing the idling frequency in this way constitutes the idling frequency detection means according to the present invention.

The higher the computed idling frequency is, the smaller value the ECU 10 sets as the specified PM deposition amount. In connection with this, the relationship between the idling frequency and the specified PM deposition amount may be stored in the ECU 10 in advance in the form of a map.

The smaller the specified PM deposition amount is, the shorter the period over which the PM deposition amount is relatively large during execution of the filter regeneration control is. Accordingly, in this embodiment, when the running state of the internal combustion engine 1 shifts to idling while the filter regeneration control is executed, the period over which the lower limit rotation speed allowing to continue regeneration Nr is larger than the upper limit value of the idling rotation speed Nlimit becomes shorter. This means that the period over which execution of the filter regeneration control is suspended while the running state of the internal combustion engine 1 is idling becomes shorter.

Therefore, according to this embodiment, the higher the idling frequency is, the more the period over which execution of the filter regeneration control is suspended while the running state of the internal combustion engine 1 is idling during execution of the filter regeneration control can be reduced. As a result, even in the case where the idling frequency is high, it is possible to reduce the frequency of stoppage of the filter regeneration control. Thus, it is possible to facilitate oxidation and removal of the PM deposited on the filter 3.

### INDUSTRIAL APPLICABILITY

According to the present invention, in an exhaust gas purification system for an internal combustion engine having a filter provided in an exhaust passage of the internal combustion engine, it is possible to oxidize and remove the PM deposited on the filter more excellently.

## Claims

1. An exhaust gas purification system for an internal combustion engine comprising:
a particulate filter provided in an exhaust passage of the internal combustion engine to trap particulate matter contained in exhaust gas;
PM deposition amount detection means for detecting the amount of the particulate matter deposited on the particulate filter; and
filter regeneration control execution means for executing, when the amount of the particulate matter detected by the PM deposition amount detection means becomes equal to or larger than a specified PM deposition amount, a filter regeneration control for oxidizing and removing the particulate matter deposited on said particulate filter by increasing the temperature of said filter to a target temperature,
**characterized by**:
idling detection means for detecting that the running state of said internal combustion engine shifts to idling; and
lower-limit-rotation-speed-allowing-to-continue-regeneration computation means for computing, based on the amount of the particulate matter detected by said PM deposition amount detection means, a lower limit rotation speed allowing to continue regeneration defined as a lower limit value of idling rotation speeds that make it possible to continue the filter regeneration control while suppressing an excessive temperature rise of said filter even when the running state of said internal combustion engine shifts to idling while the filter regeneration control is executed by said filter regeneration control execution means,
wherein when it is detected by said idling detection means that the running state of the internal combustion engine shifts to idling while the filter regeneration control is executed by said filter regeneration control execution means, if said lower limit rotation speed allowing to continue regeneration computed by said lower-limit-rotation-speed-allowing-to-continue-regeneration computation means is higher than a predetermined upper limit value of the idling rotation speed, execution of the filter regeneration control is stopped, and if said lower limit rotation speed allowing to continue regeneration computed by said lower-limit-rotation-speed-allowing-to-continue-regeneration computation means is equal to or lower than the upper limit value of the idling rotation speed, the engine rotation speed of the internal combustion engine is set to a value equal to or lower than said upper limit value of the idling rotation speed and equal to or higher than said lower limit rotation speed allowing to continue regeneration, and execution of the filter regeneration control is continued.

2. An exhaust gas purification system for an internal combustion engine according to claim 1, **characterized in that** when it is detected by said idling detection means that the running state of the internal combustion engine shifts to idling while the filter regeneration control is executed by said filter regeneration control execution means, if said lower limit rotation speed allowing to continue regeneration computed by said lower-limit-rotation-speed-allowing-to-continue-regeneration computation means is equal to or lower than said upper limit value of the idling rotation speed, the engine rotation speed of said internal combustion engine is adjusted to said lower limit rotation speed allowing to continue regeneration, and execution of the filter regeneration control is continued.

3. An exhaust gas purification system for an internal combustion engine according to claim 1 or 2 **characterized in that** the system is further provided with idling frequency detection means for detecting the frequency of shift of the running state of said internal combustion engine to idling, and the higher the frequency of shift of the running state of said internal combustion engine to idling detected by the idling frequency detection means is, the smaller said specified deposition amount is made.
